(19)

Europäisches
Patentamt
European
Patent Office
Office européen
des brevets

(11) **EP 1 926 004 A2**

(12) **EUROPEAN PATENT APPLICATION**

(43) Date of publication:
**28.05.2008 Bulletin 2008/22**

(51) Int Cl.:
*G05D 1/00* (2006.01)       *G05D 1/02* (2006.01)

(21) Application number: **07116377.8**

(22) Date of filing: **13.09.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **29.09.2006   KR 20060096297**

(71) Applicant: **Samsung Electronics Co., Ltd.**
**Suwon-si**
**Gyeonggi-do 443-742 (KR)**

(72) Inventors:
• **Hong, Young-jin**
**Samsung Advanced Inst. of Techn.**
**Gyeonggi-do 446-712 (KR)**

• **Choi, Ki-wan**
**Samsung Advanced Inst. of Techn.**
**Gyeonggi-do 446-712 (KR)**
• **Lee, Yong-beom**
**Samsung Advanced Inst. of Techn.**
**Gyeonggi-do 446-712 (KR)**
• **Lee, Sang-goog**
**Samsung Advanced Inst. of Techn.**
**Gyeonggi-do, 446-712 (KR)**
• **Lee, Hyong-ki**
**Samsung Advanced Inst. of Techn.**
**Gyeonggi-do, 446-712 (KR)**

(74) Representative: **Grootscholten, Johannes A.M. et
al**
**Arnold & Siedsma**
**Sweelinckplein 1**
**2517 GK  Den Haag (NL)**

(54) **Method, apparatus, and medium for controlling mobile device based on image of real space
including the mobile device**

(57)     Provided is a method, apparatus, and medium
for controlling a mobile device based on the image of a
real space including the mobile device, more particularly,
a method and apparatus for moving a mobile device
based on the image of a real space photographed by a
remote control of a user. The apparatus includes an image acquisition unit acquiring the image of the real space
including the mobile device using an image input unit of
a remote control; an image output unit outputting the acquired image on an output unit of the remote control; a
position detection unit recognizing the mobile device from
the output image and detecting a position of the mobile
device using the remote control; a target position detection unit converting a target position of the mobile device,
which is selected by a user on the output unit, into a target
position in the real space; and a movement control unit
moving the mobile device to the target position in the real
space.

**FIG. 1**

```
        START
          |
ACQUIRE IMAGE USING        S100
  REMOTE CONTROL
          |
OUTPUT ACQUIRED IMAGE      S110
  ON REMOTE CONTROL
          |
DETECT POSITION OF         S120
  MOBILE DEVICE
          |
DETECT TARGET              S130
  POSITION
          |
MOVE MOBILE DEVICE TO      S140
 DETECTED TARGET
    POSITION
          |
         END
```

**Description**

CROSS-REFERENCE TO RELATED APPLICATIONS

This application claims priority benefit of Korean Patent Application No. 10-2006-0096297 filed on September 29, 2006 in the Korean Intellectual Property Office, the disclosure of which is incorporated herein by reference in its entirety.

1. Field of the Invention

The present invention relates to a method, apparatus, and medium for controlling a mobile device based on the image of a real space including the mobile device, and more particularly, to a method, apparatus, and medium for moving a mobile device based on the image of a real space photographed by a remote control of a user.

2. Description of the Related Art

Until now, various conventional methods have been tried to control the movement of mobile devices. One method includes controlling each movement of a mobile device using a remote control that includes control buttons (up, down, right and left buttons). In this method, a user has to determine the direction in which the mobile device should move and manipulate a corresponding control button or stick in the determined direction as if the user was on board the mobile device. Therefore, the user may frequently make mistakes while manipulating the control button or the stick. Another drawback in the method includes the inconvenience of having to continuously press the control button until the mobile device arrives at a desired position or press another button to stop the mobile device.

Another conventional method uses a remote control having a display in order to control a mobile device. In this method, a pre-stored map and a position of the mobile device on the map are displayed on the display of the remote control. If a user designates a position on the map displayed on the display, the mobile device may move to the designated position.

To this end, the mobile device must include software and hardware for identifying its position. In addition, a map of a space in which the mobile device moves around must be given in advance, or a map generated by the mobile device while moving in the space is required.

U.S. Patent Publication No. 2001-037163 discloses a method and system for receiving image information of an area around a robot from a built-in camera of the robot using a remote control, selecting a target position in an image of the area around the robot which is displayed on a monitor of the remote control, and moving the robot to the target position.

However, when using the system, a user also has to select a target position in an image of an area seen ahead of the robot and move the robot to the selected target position as if the user was on board the robot. Therefore, the control of the user is constrained by the image of the area in a direction in which the robot moves.

In this regard, a system, which enables a user to easily move a mobile device using a remote control without particular constraints on a target position to which the mobile device should move and the control of the movement of the mobile device, is required.

SUMMARY OF THE INVENTION

According to an aspect of the present invention, the present invention moves a mobile device to a desired position based on the image of a real space including the mobile device, which is displayed on a screen of a remote control of a user.

According to another aspect of the present invention, the present invention recognizes the relative position of a mobile device and moves the mobile device based on the image of a real space including the mobile device without requiring position recognition using a map and a sensor.

According to an aspect of the present invention, there is provided a method of controlling a mobile device based on the image of a real space including the mobile device. The method includes (a) acquiring the image of the real space including the mobile device using an image input unit of a remote control; (b) outputting the acquired image on an output unit of the remote control; (c) recognizing the mobile device from the output image and detecting a position of the mobile device using the remote control; (d) selecting a target position of the mobile device on the output unit and converting the selected target position into a target position in the real space; and (e) moving the mobile device to the target position in the real space.

According to another aspect of the present invention, there is provided an apparatus for controlling a mobile device based on the image of a real space including the mobile device. The apparatus includes an image acquisition unit to acquire the image of the real space including the mobile device using an image input unit of a remote control; an image output unit to output the acquired image on an output unit of the remote control; a position detection unit to recognize the mobile device from the output image and to detect a position of the mobile device using the remote control; a target position detection unit converting a target position of the mobile device, which is selected by a user on the output unit, into a target position in the real space; and a movement control unit to move the mobile device to the target position in the real space.

According to another aspect of the present invention, there is provided a remote control for controlling a mobile device including an image acquisition unit to acquire an image of a real space including the mobile device; an image output unit to display the acquired image; a position detection unit to recognize the mobile device in the real space and to detect a position of the mobile device; and a target position detection unit to convert a target position of the mobile device, which is selected by a user on the output unit, into a target position in the real space in order to supply the target position in the real space to the mobile device.

According to another aspect of the present invention, there is provided a remote control for controlling a mobile device, including an image acquisition unit to acquire an image of a real space including the mobile device; an image output unit to display the acquired image; a position detection unit to recognize the mobile device in the real space and to detect a position of the mobile device; and a target position detection unit to convert a plurality of target positions of the mobile device, which are selected by a user on the output unit, into target positions in the real space in order to supply the target position in the real space to the mobile device for sequential movement of the mobile device.

According to another aspect of the present invention, there is provided a method of controlling a mobile device based on the image of a real space including the mobile device, the method including acquiring the image of the real space including the mobile device using an image input unit of a remote control; outputting the acquired image on an output unit of the remote control; recognizing the mobile device from the output image and detecting a position of the mobile device using the remote control; selecting a target position of the mobile device on the output unit and converting the selected target position into a target position in the real space; and outputting the target position in real space to the mobile device.

According to another aspect of the present invention, there is provided a method of controlling a mobile device based on the image of a real space including the mobile device, the method including acquiring the image of the real space including the mobile device using an image input unit of a remote control; outputting the acquired image on an output unit of the remote control; recognizing the mobile device from the output image and detecting a position of the mobile device using the remote control; and sequentially selecting a plurality of target positions of the mobile device on the output unit and converting the selected target positions into target positions in the real space; and outputting the target positions in real space to the mobile device.

According to another aspect of the present invention, there is provided at least one computer readable medium storing computer readable instructions to implement methods of the present invention.

BRIEF DESCRIPTION OF THE DRAWINGS

These and/or other aspects, features and advantages of the invention will become apparent and more readily appreciated from the following description of the embodiments, taken in conjunction with the accompanying drawings of which:

FIG. 1 is a flowchart illustrating a method of controlling a mobile device based on an image of a real space including the mobile device according to an exemplary embodiment of the present invention;
FIG. 2 is a conceptual diagram illustrating the relationship between the position of a mobile device displayed on an output unit of a remote control and that of the mobile device in a real space;
FIG. 3 is a diagram illustrating two vertical unit vectors calculated in unit vectors on a plane;
FIG. 4 illustrates an angle and distance between start and target positions of a mobile device;
FIG. 5 is a flowchart illustrating a method of controlling a mobile device based on an image of a real space including the mobile device according to another exemplary embodiment of the present invention;
FIG. 6 illustrates the relationship between a plurality of selected target positions displayed on an output unit of a remote control and target positions in a real space; and
FIG. 7 is a block diagram of an apparatus for controlling a mobile device based on an image of a real space including the mobile device according to an exemplary embodiment of the present invention.

DETAILED DESCRIPTION OF THE PREFERRED EMBODIMENTS

Reference will now be made in detail to exemplary embodiments of the present invention, examples of which are illustrated in the accompanying drawings, wherein like reference numerals refer to the like elements throughout. The invention may, however, be embodied in many different forms and should not be construed as being limited to exemplary embodiments set forth herein; rather, these exemplary embodiments are provided so that this disclosure will be thorough and complete, and will fully convey the concept of the invention to those skilled in the art. Exemplary embodiments are described below to explain the present invention by referring to the figures.

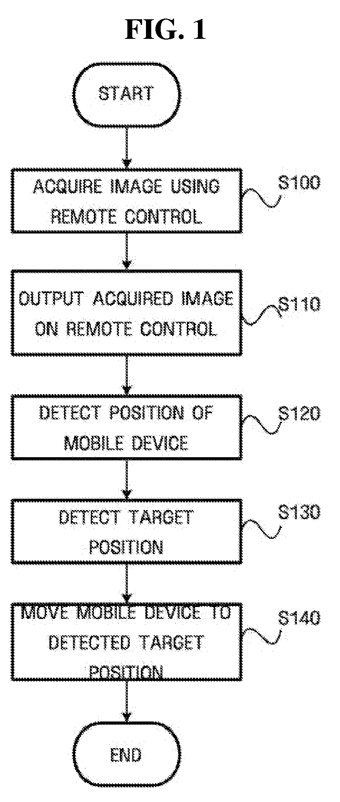

FIG. 1 is a flowchart illustrating a method of controlling a mobile device based on an image of a real space including the mobile device according to an exemplary embodiment of the present invention.

The method may include an operation of acquiring an image (operation S100), an operation of outputting the acquired image on a remote control (operation S110), an operation of detecting a position of a mobile device from the output image (operation S120), an operation of selecting a target position, to which the mobile device should move, in the output image and converting the selected target position into a target position in a real space (operation S130), and an operation of moving the mobile device to the target position (operation 5140).

In the operation of acquiring the image (operation S100), the image may be acquired using an image acquisition unit attached to the remote control. The image acquisition unit may be a camera. The camera of the remote control used by a user acquires an image of a space including the mobile device.

In the operation of outputting the acquired image (operation S110), the acquired image is output on a screen of the remote control. In other words, the image acquired by photographing a three-dimensional (3D) space is displayed on a two-dimensional (2D) screen. The screen is implemented as a conventional output unit such as a liquid crystal display (LCD) or a cathode ray tube (CRT). The screen is included in the remote control to enable a user to view the acquired image.

The position of the mobile device is detected from the output image. Specifically, the mobile device is detected from the output image, and the position of the mobile device is calculated using the remote control (operation 5120).

A method of detecting a mobile device from an output image includes detecting the position of a marker displayed on a screen.

Specifically, unique information of a mobile device can be used in order to detect the mobile device from an output image. A marker having a known size and shape is put on the mobile device so that a characteristic form of the mobile device can be perceived from the output image. For example, a square marker may be put on the mobile device in parallel to a plane on which the mobile device travels.

The outlines of an image photographed by an image input unit are detected from the output image. Specifically, the photographed image is converted into a black and white image, and color and brightness components are removed from the black and white image. Consequently, the outlines of the photographed image can be detected more accurately.

A method of detecting a plurality of lines in an image may use a Hough transform technique. In the Hough transform technique, data points of a 2D image including noise components are converted into data points in a coefficient space (Hough space or parameter space). Then, particular values represented by maximum values are detected, thereby detecting straight lines or outlines. A shape corresponding to a marker is detected from the detected outlines. Consequently, the marker is detected.

If the marker is detected from the output unit of the remote control and thus the mobile device is detected from the screen of the output unit, the position of the mobile device in the real space can be detected. In order to calculate the position of a 3D image in the real space based on a 2D image, i.e., the output image, a Fiducial marker-based tracking algorithm may be used. A process of detecting the position of the mobile device in the real space using the remote control will hereinafter be described.

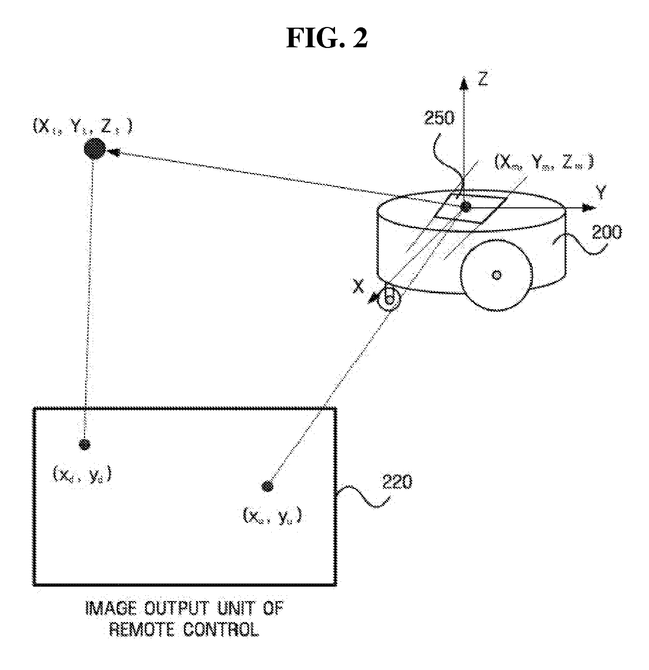

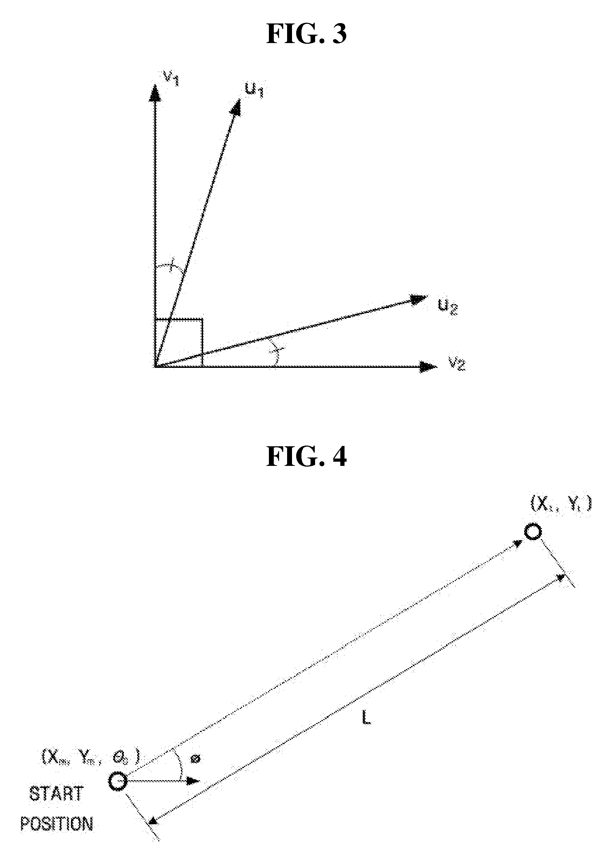

FIG. 2 is a conceptual diagram illustrating the relationship between the position of a mobile device 200 displayed on an image output unit 220 of a remote control and that of the mobile device 200 in a real space, FIG. 3 is a diagram illustrating two vertical unit vectors calculated in unit vectors on a plane,

A transformation matrix $T_{cm}$ between the position of a camera, which is an image input unit, and the position of a marker 250 in the real space may be defined by Equation (1).

$$
\begin{bmatrix} X_c \\ Y_c \\ Z_c \\ 1 \end{bmatrix} \square \begin{bmatrix} V_{11} & V_{12} & V_{13} & W_x \\ V_{21} & V_{22} & V_{23} & W_y \\ V_{31} & V_{32} & V_{33} & W_z \\ 0 & 0 & 0 & 1 \end{bmatrix} \begin{bmatrix} X_m \\ Y_m \\ Z_m \\ 1 \end{bmatrix} \square T_{cm} \begin{bmatrix} X_m \\ Y_m \\ Z_m \\ 1 \end{bmatrix} , \quad \dots (1)
$$

where $(X_c, Y_c, Z_c)$ indicates the position of the marker 250 in a coordinate system of the camera, and $(X_m, Y_m, Z_m)$ indicates the position of the marker 250 in the real space. In addition, $T_{cm}$ indicates a transformation matrix representing a transformation relationship between the position of the marker 250 in the coordinate system of the camera and that of the marker 250 in the real 3D space. The transformation matrix $T_{cm}$ may be rearranged into a rotation transformation matrix R and a position transformation matrix T.

$$T_{cm} = \begin{bmatrix} R & & & T \\ 0 & 0 & 0 & 1 \end{bmatrix}$$

$$R = \begin{bmatrix} V_{11} & V_{12} & V_{13} \\ V_{21} & V_{22} & V_{23} \\ V_{31} & V_{32} & V_{33} \end{bmatrix} \qquad \ldots (2).$$

$$T = \begin{bmatrix} W_x \\ W_y \\ W_z \end{bmatrix}$$

The relationship between the position $(x_u, y_u)$ of the marker 250 displayed on the output unit 220 of the remote control and the position $(X_c, Y_c, Z_c)$ of the marker 250 in the coordinate system of the camera may be defined by Equation (3).

$$\begin{bmatrix} hx_u \\ hy_u \\ h \\ 1 \end{bmatrix} = P \begin{bmatrix} X_c \\ Y_c \\ Z_c \\ 1 \end{bmatrix}, \quad \ldots (3)$$

where a matrix P is a perspective projection matrix. The matrix P includes constant values representing unique properties of a camera lens which are physically determined by a manufacturer according to the curvature of the lens during its manufacturing process or determined by initial experimental calibration performed after a lens user purchases the lens. h indicates a transformation constant used to transform 3D coordinates into 2D coordinates using the perspective projection matrix P.

If the marker 250 is square, two sets of both sides, i.e., two straight lines, of the square, which are parallel to each other, in an image photographed by the camera may be defined by Equation (4).

$$a_1 x + b_1 y + c_1 = 0, \quad a_2 x + b_2 y + c_2 = 0 \qquad \ldots (4)$$

Equation (4), i.e., a linear equation, can be obtained from an input image using, for example, the Hough transform technique, and $a_1$, $a_2$, $b_1$, $b_2$, $c_1$ and $c_2$ can be determined by line fitting.

Since the mobile device 200 moves on the floor of a room instead of moving up or down, it can be assumed that the position of the marker 250 is on a plane with z=0. Therefore, the two sides may be straight lines on an x-y plane.

If unit vectors respectively corresponding to the both sides are $u_1$ and $u_2$, the unit vectors $u_1$ and $u_2$ are not perpendicular to each other. Therefore, as illustrated in FIG. 3, unit vectors $v_1$ and $v_2$, which are perpendicular to each other, are defined on the plane on which the marker 250 is positioned. Then, a unit vector generated as a cross product of the unit vectors $v_1$ and $v_2$ is defined as $v_3$. Consequently, a matrix of $V_{3x3}$, which is a rotation component, in the transformation matrix $T_{cm}$ may be given by Equation (5).

$$R \square \begin{bmatrix} V_{11} & V_{12} & V_{13} \\ V_{21} & V_{22} & V_{23} \\ V_{31} & V_{32} & V_{33} \end{bmatrix} \quad \dots (5).$$

In addition, T = ($W_x$, $W_y$, $W_z$), which is a translation component T, can be calculated using Equations 1 and 3.

As described above, after the transformation matrix $T_{cm}$ is obtained, if the obtained transformation matrix $T_{cm}$ is substituted for Equations (1) and (3), the position ($X_m$, $Y_m$, $Z_m$) of the marker 250 can be calculated. In other words, since the size and shape of the marker 250 is already known, the transformation of the marker 250 displayed on the output unit 220 of the remote control can be detected. Accordingly, the position of the camera can be detected from the output unit 220 of the remote control. Since the marker 250 is attached onto the mobile device 200, the position of the mobile device 200 can be calculated.

Referring back to FIG. 1, a user selects a target position, to which the mobile device should move, on the output unit of the remote control, and the selected target position is converted into a target position in the real space (operation S130). The user may select the target position of the mobile device on the screen of the output unit of the remote control. In other words, the user may touch the screen of the output unit according to a touch screen method or input a coordinate point of the target position based on coordinates displayed on the screen of the output unit in order to select the target position.

The target position selected on the screen of the remote control is converted into a target position in the real space. Since a path along which the mobile moves and a point at which the mobile device is located exist in the real space, the target position selected on the screen must be converted into the target position in the real space. Therefore, a 2D space needs to be converted into a 3D space in order to detect the target position of the mobile device in the real space from the target position of the mobile device on the screen.

In FIG. 2, it is assumed that a user designated coordinates ($x_d$, $y_d$) as a target position of the mobile device 200 on the output unit 220 of the remote control. Based on the designated coordinates ($x_d$, $y_d$) on the output unit 200, coordinates ($X_t$, $Y_t$, $Z_t$) of a target position of the mobile device 200 in the real space can be calculated using Equations (1) and (3) described above and applying an inverse matrix $T_{cm}^{-1}$ of the transformation matrix $T_{cm}$ to the designated coordinates ($x_d$, $y_d$). In other words, $(X_t, Y_t, Z_t, 1) = T_{cm}^{-1} \bullet (hx_d, hy_d, h, 1)$.

Since the mobile device 200 moves on a plane, such as the floor of a room, in the present exemplary embodiment, z-axis values of the current and target positions of the mobile device 200 are zero. Therefore, coordinates of the current position at which the mobile device 200, such as a robot, is located in real space are ($X_m$, $Y_m$, 0), and coordinates of the target position of the mobile device are ($X_t$, $Y_t$, 0).

Referring back to FIG. 1, if the target position of the mobile device in the real space is detected, the mobile device is moved to the detected target position by a driving unit included in the mobile device (operation S140). The driving unit, which moves the mobile device, includes a power unit applying power, such as a built-in motor or engine, and a transferring member such as a wheel or a caterpillar tread.

FIG. 4 illustrates an angle and distance between start and target positions of a mobile device.

A mobile device moves from its current position to a target position designated by a user on a floor surface or plane of a room. Therefore, the relationship between the two positions on the plane may be indicated by two coordinate points or by angle and distance as illustrated in FIG. 4. If a start position and an initial angle of the mobile device are ($X_m$, $Y_m$, $\theta_0$) and if a target position to which the mobile device should move is ($X_t$, $Y_t$), an angle $\varphi$ by which the mobile device should rotate and a distance L by which the mobile device should travel may be given by Equation (6).

$$\phi = \tan^{-1}\left( \frac{Y_t - Y_m}{X_t - X_m} \right) - \theta_0$$

$$L = \sqrt{(X_t - X_m)^2 + (Y_t - Y_m)^2} \qquad \ldots (6).$$

Therefore, the driving unit including a sensor sensing distance, such as an encoder or a potentiometer, may move the mobile device to the target position by rotating the mobile device at a predetermined angle $\varphi$ and moving the mobile device a predetermined distance L. In this case, the initial angle $\theta_0$ of the mobile device may be obtained by taking the rotation transformation matrix V from the transformation matrix $T_{cm}$ and converting the rotation transformation matrix V into an Euler angle.

Alternatively, a user may store a target position to which a mobile device should move, and the mobile device may be controlled to move to the target position by feedback recognizing the mobile device on an image which is displayed on a screen of a remote control as the mobile device moves.

Once the mobile device arrives at the target position designated by the user, the mobile device may perform its unique function. For example, if the mobile device is a cleaning robot, it may clean a point at the target position or an area including the point.

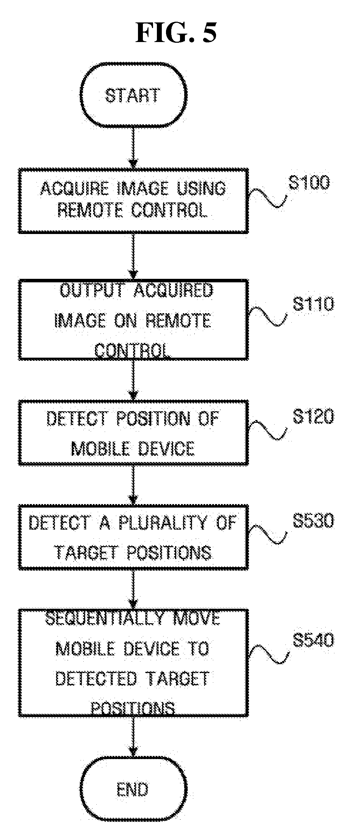

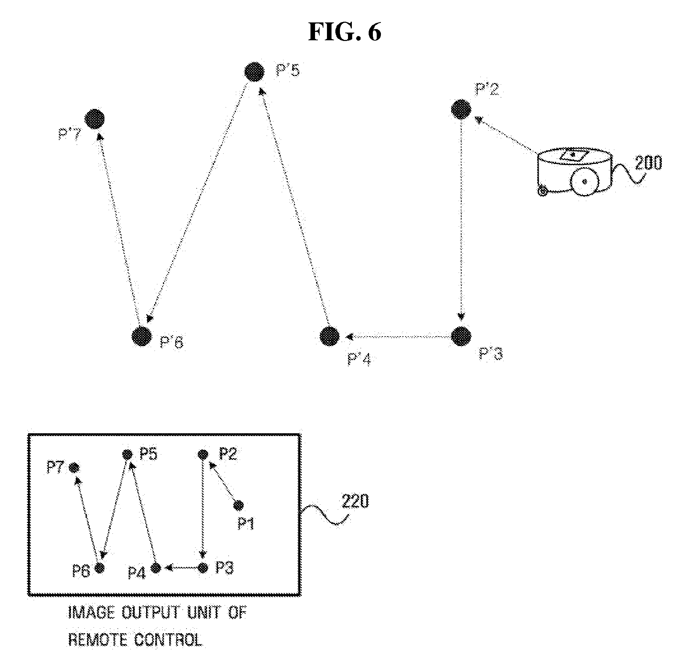

FIG. 5 is a flowchart illustrating a method of controlling a mobile device based on an image of a real space including the mobile device according to another exemplary embodiment of the present invention. FIG. 6 illustrates the relationship between a plurality of selected target positions displayed on an output unit 220 of a remote control and target positions in a real space.

The method may include an operation of acquiring an image (operation S100), an operation of outputting the acquired image on a remote control (operation S110), an operation of detecting a position of a mobile device from the output image (operation S120), an operation of selecting a plurality of target positions, to which the mobile device should move, on the output image and converting the selected target positions into target positions in a real space (operation S530), and an operation of sequentially moving the mobile device to the target positions (operation 5540).

The operations other than the operation of selecting the target positions of the mobile device on the output image and converting the selected target positions into the target positions of the mobile device in the real space (operation S530) and the operation of sequentially moving the mobile device to the target positions (operation S540) have been described above and thus will not be described here.

If a user designates a plurality of target positions of a mobile device, the designated target positions may form a path along which the mobile device should move. In other words, if the designated target positions are connected by a straight line, a path along which the mobile device should move may be formed. If the user designates one or more target positions, to which the mobile device should move, on a screen of the output unit of the remote control, the designated target positions are converted into target positions in the real space (operation S530). Then, a driving unit moves the mobile device to each of the target positions in the real space along the path designated by the user (operation S540). The operation of selecting the target positions on the output unit of the remote control and converting the selected target positions into the target positions in the real space (operation S530) may be embodied by extending the operation of selecting a target position on the output unit of the remote control (operation S13) and the operation of converting the selected target position into a target position in the real space (operation S140).

Referring to FIG. 6, if a mobile device 200 is a cleaning robot, a user may designate a path along which the cleaning robot should perform a cleaning function. In this case, the user selects a plurality of positions (e.g., 6 points P2 through P7) on the output unit 220 of the remote control. Then, the selected positions are converted into positions P'2 through P'7 in the real space. Accordingly, the mobile device 200 is rotated and driven straight ahead to move to the positions P'2 through P'7, sequentially. Therefore, in the present exemplary embodiment, if a user designates a path along which a cleaning robot should move, the cleaning robot can perform the cleaning function while moving along a zigzag, spiral, or predetermined path.

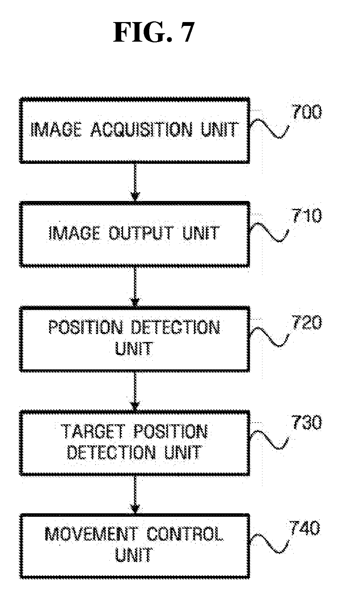

FIG. 7 is a block diagram of an apparatus for controlling a mobile device based on an image of a real space including the mobile device according to an exemplary embodiment of the present invention.

Referring to FIG. 7, the apparatus may include an image acquisition unit 700, an image output unit 710, a position detection unit 720, a target position detection unit 730, and a movement control unit 740.

The image acquisition unit 700 acquires an image using an image acquisition unit attached to a remote control. The image acquisition unit 700 may acquire an image of a space including a mobile device by using an image acquisition medium such as a camera.

The image output unit 710 outputs the acquired image on a screen of the remote control to enable a user to view the acquired image.

The position detection unit 720 recognizes the mobile device on the image output on the image output unit 710 and detects the position of the mobile device. The position detection unit 720 may include a marker recognition unit and a marker position calculation unit. The marker recognition unit may be used in order to recognize the mobile device in the output image. If the marker having a known size and shape is attached to the mobile device, the marker recognition unit can recognize the outline of the marker in the output image using the Hough transform technique and extract the marker. Since the extracted marker symbolizes the mobile device, the mobile device can be recognized by the marker.

The marker position calculation unit may calculate position coordinates of the marker in the real space. Since the marker is recognized in a 2D image displayed on the image output unit 710, the 2D image must be converted into a 3D image in order to detect the position of the marker, i.e., the position of the mobile device, in the real space. The position $(X_m, Y_m, Z_m)$ of the marker can be calculated using Equations 1 and 3, which are used to calculate the position of a marker based on the transformation of the marker.

If the user selects a target position, to which the mobile device should move, in the image output on the image output unit 710, the target position detection unit 730 converts the selected target position into a target position in the real space. The target position detection unit 730 may include a target position input unit and a target position conversion unit. The target position input unit is used by the user to input a target position of the mobile device to the image output unit 710. For example, the user may touch a touch screen or input coordinates of the target position.

Once the target position of the mobile device is input to the image output unit 710, the target position conversion unit converts the target position on the image output unit 710 into a target position in the real space. To this end, the target position conversion unit receives coordinates of the target position on the image output unit 710, which are given by Equations 1 and 2, and calculates coordinates $(X_t, Y_t, Z_t)$ of the target position in the real space.

The movement control unit 740 moves the mobile device to the target position in the real space. The movement control unit 740 may include a power unit applying power, such as a built-in motor or engine, and a transferring member such as a wheel or a caterpillar tread. Once the current and target positions of the mobile device are identified, the distance and direction between the two positions can be obtained. Accordingly, the movement control unit rotates the mobile device toward the target position and moves the mobile device by the distance until the mobile device arrives at the target position selected by the user.

An apparatus for controlling a mobile device based on an image of a real space including the mobile device according to another exemplary embodiment of the present invention may further include a function execution unit executing a function of a mobile device after the mobile device arrives at a target position. The mobile device may have its unique function. For example, if the mobile device is a cleaning robot, cleaning is the unique function of the cleaning robot. Therefore, the apparatus may further include the function execution unit controlling the cleaning robot to perform its cleaning function after arriving at a target position.

An apparatus for controlling a mobile device based on an image of a real space including the mobile device according to another exemplary embodiment of the present invention may select a plurality of target positions to which the mobile device should move and sequentially move the mobile device to the selected target positions.

If a user sequentially selects a plurality of target positions on a screen of an image output unit, a target position detection unit may convert the selected target positions on the screen into target positions in the real space. Therefore, the user can designate a path along which the mobile device should move by selecting the target positions on the screen.

A movement control unit sequentially moves the mobile device to the target positions along the path designated by the user.

In addition to the above-described exemplary embodiments, exemplary embodiments of the present invention can also be implemented by executing computer readable code/instructions in/on a medium/media, e.g., a computer readable medium/media. The medium/media can correspond to any medium/media permitting the storing and/or transmission of the computer readable code/instructions. The medium/media may also include, alone or in combination with the computer readable code/instructions, data files, data structures, and the like. Examples of code/instructions include both machine code, such as produced by a compiler, and files containing higher level code that may be executed by a computing device and the like using an interpreter. In addition, code/instructions may include functional programs and code segments.

The computer readable code/instructions can be recorded/transferred in/on a medium/media in a variety of ways, with examples of the medium/media including magnetic storage media (e.g., floppy disks, hard disks, magnetic tapes, etc.), optical media (e.g., CD-ROMs, DVDs, etc.), magneto-optical media (e.g., floptical disks), hardware storage devices (e.g., read only memory media, random access memory media, flash memories, etc.) and storage/transmission media such as carrier waves transmitting signals, which may include computer readable code/instructions, data files, data structures, etc. Examples of storage/transmission media may include wired and/or wireless transmission media. The medium/media may also be a distributed network, so that the computer readable code/instructions are stored/transferred and executed in a distributed fashion. The computer readable code/instructions may be executed by one or more processors. The computer readable code/instructions may also be executed and/or embodied in at least one application specific integrated circuit (ASIC) or Field Programmable Gate Array (FPGA).

In addition, one or more software modules or one or more hardware modules may be configured in order to perform the operations of the above-described exemplary embodiments.

The term "module", as used herein, denotes, but is not limited to, a software component, a hardware component, a plurality of software components, a plurality of hardware components, a combination of a software component and a hardware component, a combination of a plurality of software components and a hardware component, a combination of a software component and a plurality of hardware components, or a combination of a plurality of software components and a plurality of hardware components, which performs certain tasks. A module may advantageously be configured to reside on the addressable storage medium/media and configured to execute on one or more processors. Thus, a module may include, by way of example, components, such as software components, application specific software component, object-oriented software components, class components and task components, processes, functions, operations, execution threads, attributes, procedures, subroutines, segments of program code, drivers, firmware, microcode, circuitry, data, databases, data structures, tables, arrays, and variables. The functionality provided for in the components or modules may be combined into fewer components or modules or may be further separated into additional components or modules. Further, the components or modules can operate at least one processor (e.g. central processing unit (CPU)) provided in a device. In addition, examples of a hardware components include an application specific integrated circuit (ASIC) and Field Programmable Gate Array (FPGA). As indicated above, a module can also denote a combination of a software component(s) and a hardware component(s). These hardware components may also be one or more processors.

The computer readable code/instructions and computer readable medium/media may be those specially designed and constructed for the purposes of the present invention, or they may be of the kind well-known and available to those skilled in the art of computer hardware and/or computer software.

As described above, the present invention provides at least one of the following advantages.

First, a move mobile device can be moved to a desired position based on an image of a real space including the mobile device, which is displayed on a screen of a remote control used by the user.

Second, the mobile device can be moved to the desired position based on the image of the real space without requiring position recognition using a map and a sensor.

Third, a user can designate a path along which the mobile device should move, and the mobile device can be controlled to move along the designated path.

Fourth, the mobile device does not need a sensor sensing the position of the mobile device.

However, the advantages of the present invention are not restricted to the advantages set forth herein. The above and other advantages of the present invention will become more apparent to one of daily skill in the art to which the present invention pertains by referencing the claims of the present invention given below.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

**Claims**

1. A method of controlling a mobile device based on the image of a real space including the mobile device, the method comprising:

   (a) acquiring the image of the real space including the mobile device using an image input unit of a remote control;
   (b) outputting the acquired image on an output unit of the remote control;
   (c) recognizing the mobile device from the output image and detecting a position of the mobile device using the remote control;
   (d) selecting a target position of the mobile device on the output unit and converting the selected target position into a target position in the real space; and
   (e) moving the mobile device to the target position in the real space.

2. The method of claim 1, further comprising performing a function of the mobile device after moving the mobile device to the target position in the real space.

3. The method of claim 1, wherein the image input unit is a camera which can photograph an image.

4. The method of claim 1, wherein the output unit is a touch screen outputting an image photographed by the image input unit and receiving an input from the user or a display comprising a character input unit, by which the user can input coordinates, on a screen of the display.

5. The method of claim 1, wherein (c) comprises recognizing the mobile device by recognizing a marker which is included in the mobile device and which has a known size and shape.

6. The method of claim 5, wherein (c) further comprises sensing transformation of the marker detected from the output image, calculating a position of the marker in the real space, and thus detecting the position of the marker.

7. The method of claim 1, wherein (d) comprises selecting the target position of the mobile device by touching the touch screen or inputting screen coordinates of the target position.

8. The method of claim 7, wherein (d) further comprises perceiving the transformation of the marker attached to the mobile device from the acquired image in order to convert the target position selected from the acquired image into the target position in the real space and thus detecting the target position of the mobile device in the real space.

9. The method of claim 1, wherein (e) comprises moving the mobile device to the target position in the real space by rotating the mobile device and driving the mobile device straight ahead using a driving unit.

10. A method of controlling a mobile device based on the image of a real space including the mobile device, the method comprising:

(a) acquiring the image of the real space including the mobile device using an image input unit of a remote control;
(b) outputting the acquired image on an output unit of the remote control;
(c) recognizing the mobile device from the output image and detecting a position of the mobile device using the remote control;
(d) sequentially selecting a plurality of target positions of the mobile device on the output unit and converting the selected target positions into target positions in the real space; and
(e) sequentially moving the mobile device to the target positions in the real space.

11. An apparatus for controlling a mobile device based on the image of a real space including the mobile device, the apparatus comprising:

an image acquisition unit to acquire the image of the real space including the mobile device using an image input unit of a remote control;
an image output unit to output the acquired image on an output unit of the remote control;
a position detection unit to recognize the mobile device from the output image and to detect a position of the mobile device using the remote control;
a target position detection unit to convert a target position of the mobile device, which is selected by a user on the output unit, into a target position in the real space; and
a movement control unit to move the mobile device to the target position in the real space.

12. The apparatus of claim 11, further comprising a function execution unit to perform a function of the mobile device after moving the mobile device to the target position in the real space.

13. The apparatus of claim 11, wherein the image input unit is a camera to photograph an image.

14. The apparatus of claim 11, wherein the output unit is a touch screen to output an image photographed by the image input unit and to receive an input from the user or a display comprising a character input unit, by which the user can input coordinates, on a screen of the display.

15. The apparatus of claim 11, wherein the position detection unit recognizes the mobile device by recognizing a marker which is included in the mobile device and which has a known size and shape.

16. The apparatus of claim 15, wherein the position detection unit further comprises a position calculation unit to perceive transformation of the marker detected from the output image, to calculate a position of the marker in the real space, and to detect the position of the marker.

17. The apparatus of claim 11, wherein the target position detection unit comprises a target position input unit to allow the user to input the target position of the mobile device by touching the touch screen or by inputting screen coordinates of the target position.

18. The apparatus of claim 17, wherein the target position detection unit further comprises a target position conversion unit to recognize the transformation of the marker attached to the mobile device from the acquired image in order to convert the target position selected from the acquired image into the target position in the real space and to detect the target position of the mobile device in the real space.

19. The apparatus of claim 11, wherein the movement control unit moves the mobile device to the target position in the real space by rotating the mobile device and driving the mobile device straight ahead using a driving unit.

20. An apparatus for controlling a mobile device based on the image of a real space including the mobile device, the apparatus comprising:

an image acquisition unit to acquire the image of the real space including the mobile device using an image input unit of a remote control;
an image output unit to output the acquired image on an output unit of the remote control;
a position detection unit to recognize the mobile device from the output image and to detect a position of the mobile device using the remote control;
a target position detection unit to convert a plurality of target positions of the mobile device, which are selected by a user on the output unit, into target positions in the real space; and
a movement control unit to sequentially move the mobile device to the target positions in the real space.

21. At least one computer readable medium storing computer readable instructions that control at least one processor to implement the method of claim 1.

22. At least one computer readable medium storing computer readable instructions that control at least one processor to implement the method of claim 10.

23. A remote control for controlling a mobile device, comprising:

an image acquisition unit to acquire an image of a real space including the mobile device;
an image output unit to display the acquired image;
a position detection unit to recognize the mobile device in the real space and to detect a position of the mobile device; and
a target position detection unit to convert a target position of the mobile device, which is selected by a user on the output unit, into a target position in the real space in order to supply the target position in the real space to the mobile device.

24. A remote control for controlling a mobile device, comprising:

an image acquisition unit to acquire an image of a real space including the mobile device;
an image output unit to display the acquired image;
a position detection unit to recognize the mobile device in the real space and to detect a position of the mobile device; and
a target position detection unit to convert a plurality of target positions of the mobile device, which are selected by a user on the output unit, into target positions in the real space in order to supply the target position in the real space to the mobile device for sequential movement of the mobile device.

25. A method of controlling a mobile device based on the image of a real space including the mobile device, the method comprising:

(a) acquiring the image of the real space including the mobile device using an image input unit of a remote control;
(b) outputting the acquired image on an output unit of the remote control;
(c) recognizing the mobile device from the output image and detecting a position of the mobile device using the remote control;
(d) selecting a target position of the mobile device on the output unit and converting the selected target position into a target position in the real space; and
(e) outputting the target position in real space to the mobile device.

26. At least one computer readable medium storing computer readable instructions that control at least one processor to implement the method of claim 25.

**27.** A method of controlling a mobile device based on the image of a real space including the mobile device, the method comprising:

(a) acquiring the image of the real space including the mobile device using an image input unit of a remote control;
(b) outputting the acquired image on an output unit of the remote control;
(c) recognizing the mobile device from the output image and detecting a position of the mobile device using the remote control; and
(d) sequentially selecting a plurality of target positions of the mobile device on the output unit and converting the selected target positions into target positions in the real space; and
(e) outputting the target positions in real space to the mobile device.

**28.** At least one computer readable medium storing computer readable instructions that control at least one processor to implement the method of claim 27.

# FIG. 1

START

ACQUIRE IMAGE USING REMOTE CONTROL — S100

OUTPUT ACQUIRED IMAGE ON REMOTE CONTROL — S110

DETECT POSITION OF MOBILE DEVICE — S120

DETECT TARGET POSITION — S130

MOVE MOBILE DEVICE TO DETECTED TARGET POSITION — S140

END

# FIG. 2

IMAGE OUTPUT UNIT OF
REMOTE CONTROL

# FIG. 3

# FIG. 4

# FIG. 5

START

↓

ACQUIRE IMAGE USING REMOTE CONTROL — S100

↓

OUTPUT ACQUIRED IMAGE ON REMOTE CONTROL — S110

↓

DETECT POSITION OF MOBILE DEVICE — S120

↓

DETECT A PLURALITY OF TARGET POSITIONS — S530

↓

SEQUENTIALLY MOVE MOBILE DEVICE TO DETECTED TARGET POSITIONS — S540

↓

END

**FIG. 6**

IMAGE OUTPUT UNIT OF
REMOTE CONTROL

# FIG. 7

IMAGE ACQUISITION UNIT — 700

IMAGE OUTPUT UNIT — 710

POSITION DETECTION UNIT — 720

TARGET POSITION DETECTION UNIT — 730

MOVEMENT CONTROL UNIT — 740

## REFERENCES CITED IN THE DESCRIPTION

**Patent documents cited in the description**

- KR 1020060096297
- US 2001037163 A